# EUROPÄISCHE PATENTSCHRIFT

(11) **EP 2 069 221 B1**
(45) Veröffentlichungstag und Bekanntmachung des Hinweises auf die Patenterteilung: **09.03.2011**
(21) Anmeldenummer: 07800196.3
(22) Anmeldetag: 01.10.2007
(51) Int. Cl.: B65G 59/02, B65G 61/00

(54) **VORRICHTUNG UND VERFAHREN ZUR ENTNAHME VON LADEGÜTERN**
APPARATUS FOR, AND METHOD OF, REMOVING ARTICLES
DISPOSITIF ET PROCÉDÉ D'ENLÈVEMENT DE MARCHANDISES

(30) Priorität: 02.10.2006 AT 16402006
(43) Veröffentlichungstag der Anmeldung: 17.06.2009
(73) Patentinhaber: TGW Mechanics GmbH, 4600 Wels (AT)
(72) Erfinder: HANSL, Rudolf, A-4020 Linz (AT); ANGLEITNER, Karl, 4921 Hohenzell (AT); RADLER, Thomas, 4600 Wels (AT)
(74) Vertreter: Ofner, Clemens
(86) Internationale Anmeldenummer: PCT/AT2007/000458
(87) Internationale Veröffentlichungsnummer: WO 2008/040037

(56) Entgegenhaltungen:
- EP-A- 0 321 680
- US-I4- T 998 009

## Beschreibung

Die Erfindung betrifft eine Vorrichtung und ein Verfahren zur Entnahme von Ladegütem sowie eine Transporrvorrichtung für Ladegüter, wie in dem Oberbegriff der Ansprüch 1, 10 und 11 beschrieben.

Aus der DE 26 31 942 A1 ist eine Vorrichtung zur Entnahme von Ladegütem bekannt, die eine, ein über an einem Rahmen gelagerte Umlenkelemente geführtes und über einen Antrieb antreibbares Förderorgan aufweisende Fördervorrichtung sowie ein in der Übernahmestellung gegen die dem Förderorgan zugewandte Seitenwand des zu entnehmenden Ladegutes reibschlüssig anlegbares Kontaktelement umfasst, welches durch Reibungsberührung das Ladegut mit seiner Vorderkante in eine Stellung anhebt, in der das Ladegut vom Förderorgan abgefördert werden kann. Das dem zu entnehmenden Ladegut benachbarte Umlenkelement ist über eine Feder am Rahmen derart gelagert dass eine fortschreitend zunehmende Reibungskraft auf das Ladegut ausübbar ist. wenn das kontaktelement über einen Schlinen in Richtung auf das Ladegut bewegt wird. Auch wenn mit dieser bekannten Vorrichtung Ladegüter von unterschiedlicher(m) Größe oder Gewicht von einem Stapel entnommen werden können, stellt sich die Reibkraft stets in Abhängigkeit vom Kräfiegleichgewicht zwischen der Gewichtskraft des zu entnehmenden Ladegutes und der Federkraft ein, unabhängig von der Beschaffenbeit des Ladegutes. wie die Formstabilität der Seitenwände. Wandstärke. Lagestabilität und dgl. Diese Gegebenheit und die Tatsache, dass der Umlenkdurchmesser des Umlenkelementes sehr klein ist. bringen das Problem mit sich, dass ein hoher Anpressdruck auf die Seitenwand einwirkt. Somit ist nicht sichergestellt, dass die Entnahme eines Ladegutes von einer Einlagerposition an einem Lagerplatz, beispielsweise auf einer Palene oder einem Regalfach und dgl. ohne Beschädigung, wie Eindrücken der Seitenwand erfolgen Kann. Aus der UST999 009I4 ist eine Vorrichtung und ein Verfahren zur Entnahme von Ladegütem sowie eine Transportvorrichtung für Ladegüter gemäß dem Oberbegriff der Ansprüch 1, 10 und 11 bekannt. Der vorhegenden Erfindung liegt die Aufgabe zugrunde, eine vorrichtung und ein Verfahren zur Entnahme von Ladegütern zu schaffen, mit der bzw. dem Ladegüter gegebenenfalls unterschiedlichster Beschaffenheit schonend und in besonders zuverlässiger Weise zwischen einer Einlagerposition an einem Lagerplatz und einer Abstellposition an einer Fördervorrichtung manipuliert werden können. Diese Vorrichtung soll sich insbesondere für den Einsatz auf einer Transportvorrichtung eignen.

Die Aufgabe der Erfindung wird durch die in den Ansprüchen 1 und 11 wiedergegebenen Merkmale und Maßnahmen gelöst. Dabei ist von Vorteil, dass in der Übernahmestellung der Fördervorrichtung der zur Seitenwand des Ladegutes im wesentlichen planparallele Anlageabschnitt eine aus dessen Längserstreckung in Umlaufrichtung des Förderorgans und dessen Breite gebildete Kontaktfläche ergibt, die trotz niedrigem Anpressdruck des Förderorgans auf die Seitenwand dennoch eine zuverlässige Manipulation insbesondere Entnahme eines Ladegutes von einer Einlagerposition an einem Lagerplatz ermöglicht. Somit können nun auch Ladegüter mit formweichen Seitenwänden manipuliert werden, ohne an diesen eine bleibende Beschädigung zu verursachen.

Von Vorteil ist auch die Ausgestaltung und Maßnahme nach den Ansprüchen 2 und 12, da einerseits durch die Vergrößerung der Kontaktftäche in der Entnahmestellung das Förderorgan mit seinem Anlageabschnitt mit niedriger Anstellkraft aber dennoch hoher Reibung zwischen Förderorgan und Ladegut und andererseits durch den sehr kleinen Winkel zwischen den Ebenen der vorzugsweise horizontalen Einlagerposition und der angekippten Entnahmeposition des Ladegutes eine schonende und sichere Manipulation unterschiedlichster Ladegüter möglich ist. Mit der erfindungsgemäßen Vorrichtung können Ladegüter manipuliert werden, die auch sehr kippkritisch sind.

Gemäß der Ausführung nach Anspruch 3 kann durch die sehr kurzen Stellwege des dritten Umlenkelementes zur Verstellung des Förderorgans zwischen der Entnahme- und Transportstellung die Manipulationszeit, insbesondere zur Entnahme und Abtransport eines Ladegutes, erheblich verringert werden. Mit anderen Worten kann die kontaktfläche sehr rasch in eine geneigte Förderebene verstellt werden.

Die Ausbildung nach Anspruch 4 wird mit Vorteil bei besonders kippkritischen Ladegütern eingesetzt, beispielsweise Ladegüter, die mit einer Flüssigkeit gefüllt sind oder wenn die Kontaktfläche derart in die Förderebene umgelegt werden soll. dass das Ladegut aus seiner Einlagerposition in die Entnahmeposition schwingungsfrei fortbewegt werden kann.

Ein besonders kompakter Aufbau der Fördervorrichtung wird durch die. Ausführung nach Anspruch 5 erreicht.

Von Vorteil ist auch eine Weiterbildung nach Anspruch 6. da wahlweise sämtliche Ladegüter oder nur einzelne Ladegüter der obersten Lage entnommen werden können. Sind die Fördervorrichtungen mit einem gemeinsamen Antrieb, gekuppelt bewegen sich die Förderorgane synchron mit gleicher Umlaufgeschwindigkeit. Sofern sämtliche Ladegüter der obersten Lage beispielsweise entnommen werden sollen, werden die Förderorgane in der Übernahmestellung derart verstellt, dass jedes Förderorgan mit seinem Anlageabschnitt reibschlüssig gegen die Seitenwand der Ladegüter angelegt wird. Sind hingegen nur einzelne Ladegüter der obersten Lage zu entnehmen, werden in der Übernahmestellung ausschließlich jene der entsprechenden Entnahmeposition bzw dem zu entnehmenden Ladegut zugeordneten Förderorgane verstellt. Ist jeder Fördervorrichtung ein eigener Antrieb zugeordnet, werden die Förderorgane dann angetrieben wenn ein Ladegut von einer gewünschten Einlagerposition der obersten Lage entnommen werden muss. Dadurch sind eine besonders schonende Betriebsweise der Fördervorrichtungen und eine flexible Entnahme von Ladegütern möglich.

Gemäß der Ausbildung nach Anspruch 7 kann die Entnahme eines Ladegutes mit hoher Geschwindigkeit erfolgen.

Von Vorteil ist auch die Ausgestaltung nach Anspruch 8, da die Eingriffselemente in der Entnahmestellung des Förderorgans gegen die Seitenwand des Ladegutes mit einer Anstellkraft angelegt und dabei elastisch verformt sind, sodass hervorragende Reibungsverhältnisse zwischen Förderorgan und Ladegut vorliegen.

Die Ausführung nach Anspruch 9 erweist sich von Vorteil, da zusätzlich zur Reibungsberührung zwischen der Kontaktfläche an den Eingriffelementen und dem Ladegut auf der Förderbewegung des Ladegutes aus der Einlagerposition in die Entnahmeposition die Vorderkante in einen Freiraum eintauchen und gegen eine diese seitlich begrenzende Flanke abgestützt wer-. den kann, sodass über einen gewissen Bewegungsweg des Ladegutes auf seiner Förderbewegung in die Entnahmeposition, eine formschlüssige Mitnahme des Ladegutes zumindest zeitweise vorliegt.

Die Aufgabe der Erfindung wird aber auch durch die Merkmale des Anspruches 10 gelöst. Der Vorteil ist, dass die mit den oben genannten Vorteilen einsetzbare Vorrichtung zu einem einfachen Gesamtaufoau einer Transportvorrichtung beiträgt und sich die Produktivität der Transportvorrichtung wesentlich erhöhen lässt.

Die Erfindung wird im nachfolgenden anhand der in den Zeichnungen dargestellten Ausführungsbeispiele näher erläutert.

Es zeigen:
- Fig. 1 bis 1g): schematisch den erfindungsgemäßen Entnahmevorgang eines Ladegutes von einem Lagerplatz mit einer erfindungsgemäßen Vorrichtung in erster Ausfüh- rung und mehreren zeitlich aufeinander folgenden Verfahrensschritten;
- Fig. 2 bis 2g: schematisch den erfindungsgemäßen Entnahmevorgang eines Ladegutes von einem Lagerplatz mit einer erfindungsgemäßen Vorrichtung in zweiter Ausfüh- rung und mehreren zeitlich aufeinander folgenden Verfahrensschritten:
- Fig. 3, 3a: eine dritte Ausführungsvariante der erfindungsgemäßen Vorrichtung zur Mani- pulation von Ladegütern. in vereinfachter Darstellung;
- Fig. 4: eine vierte Ausführung der erfindungsgemäßen Vorrichtung mit mehreren in Nebeneinanderanordnung zusammengesetzten Fördervorrichtungen, in Drauf- sicht und vereinfachter Darstellung;
- Fig. 5: eine Ansicht gemäß den Linien V-V in Fig. 4 auf die Vorrichtung bei der Ent- nahme von Ladegütern, in stark vereinfachter Darstellung;
- Fig. 6 bis 8: unterschiedliche Ausführungen eines Förderorgans in Seitenansicht und stark vereinfachter Darstellung.

Einführend sei festgehalten. dass in den unterschiedlich beschriebenen Ausführungsformen gleiche Teije mit gleichen Bezugszeichen bzw gleichen Bauteildezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übenragen werden können. Auch sind die in der Beschreibung gewählten Lageangaben. wie z.B. oben. unten; seitlich usw. auf die unmittelbar beschriebene sowie dargestellte Figur bezogen und sind bei einer Lageänderung sinngemäß auf die neue Lage zu übertragen.

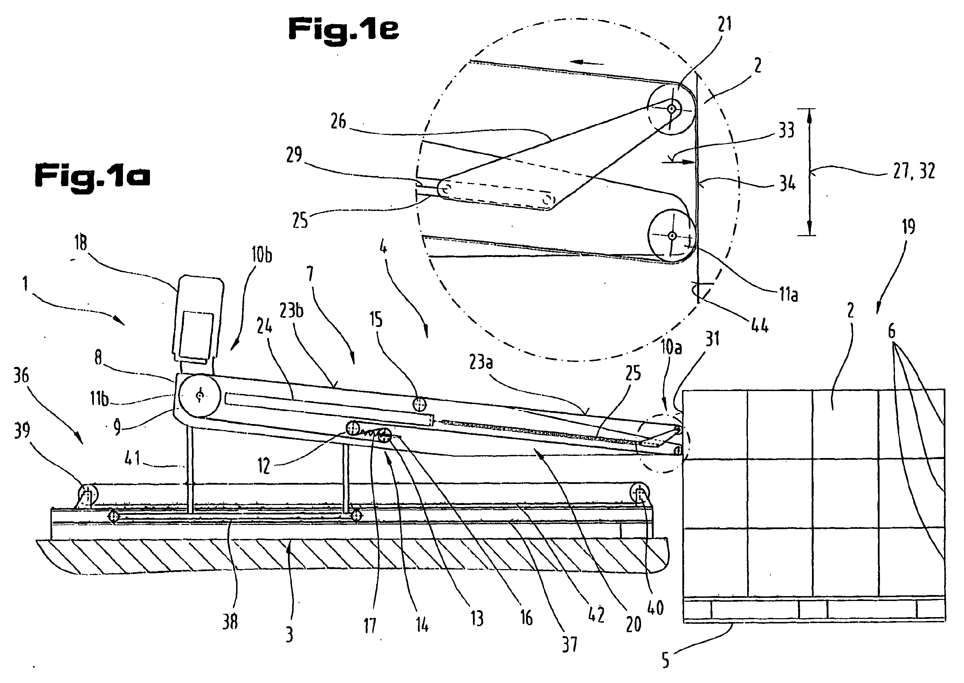

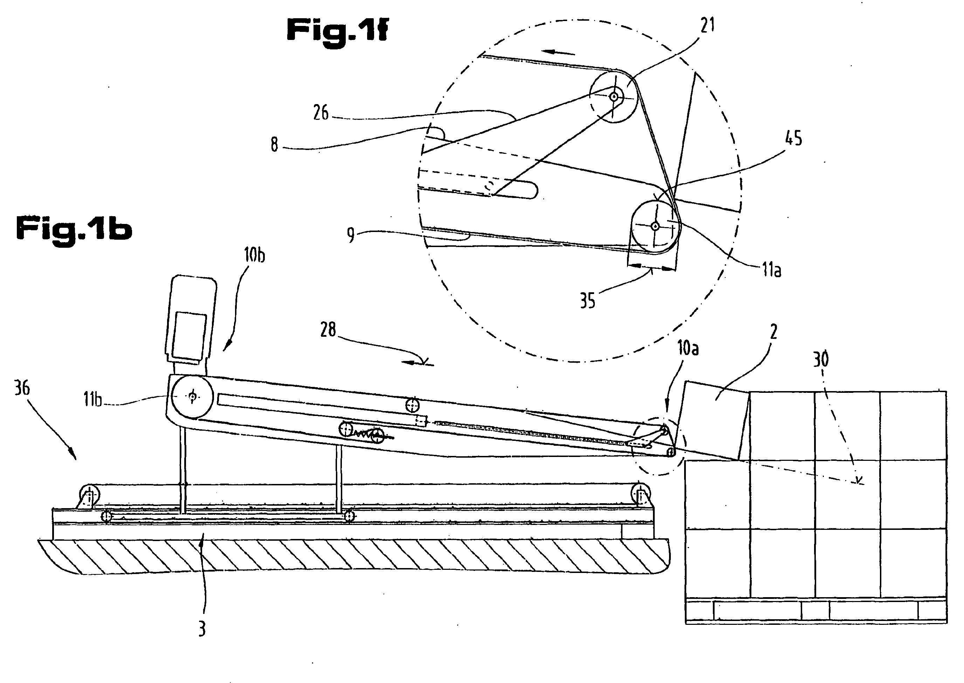

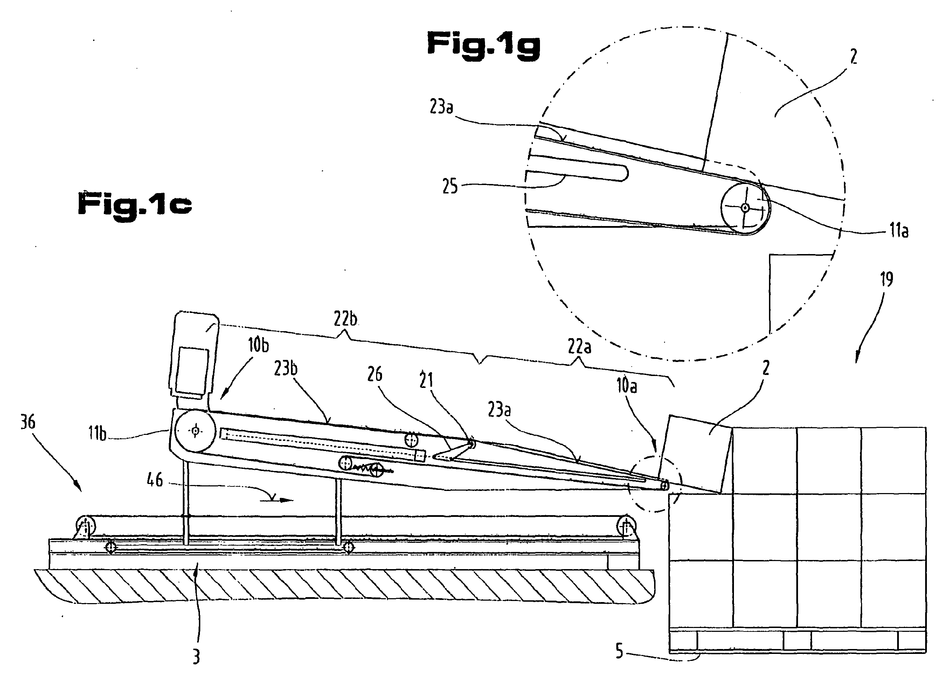

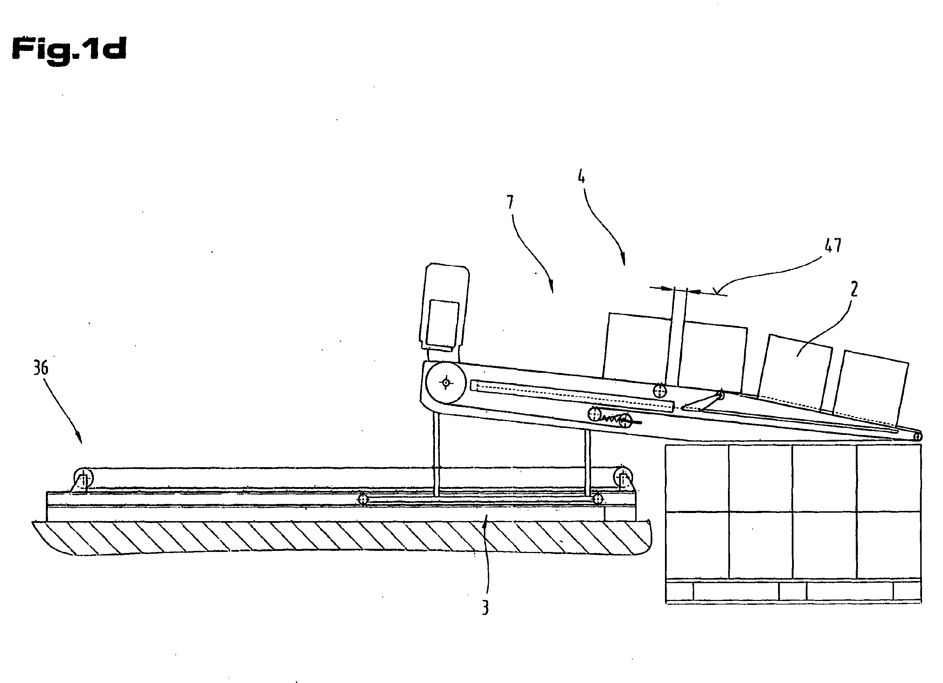

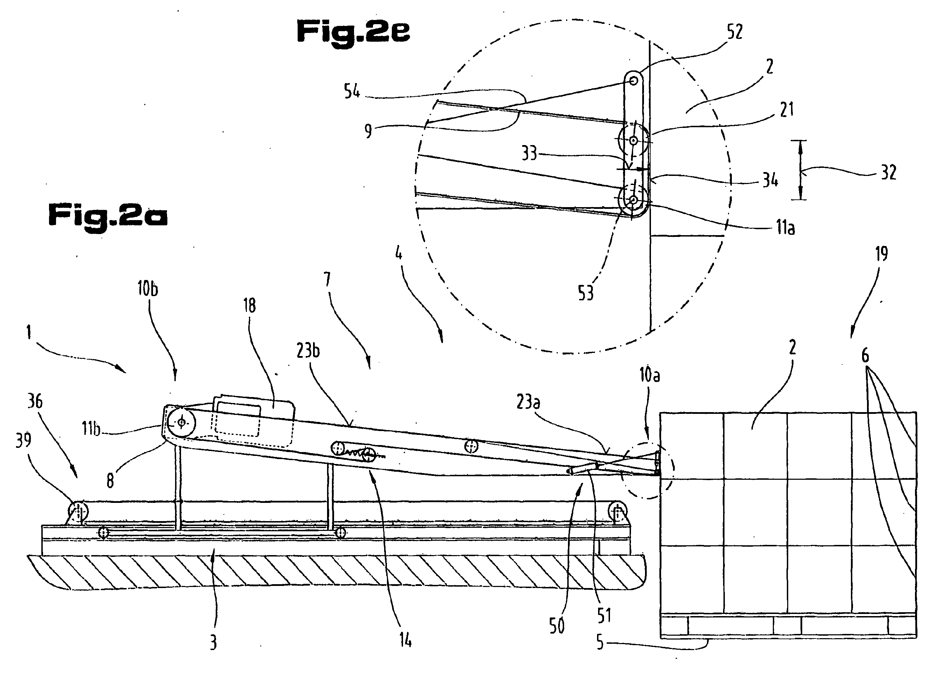

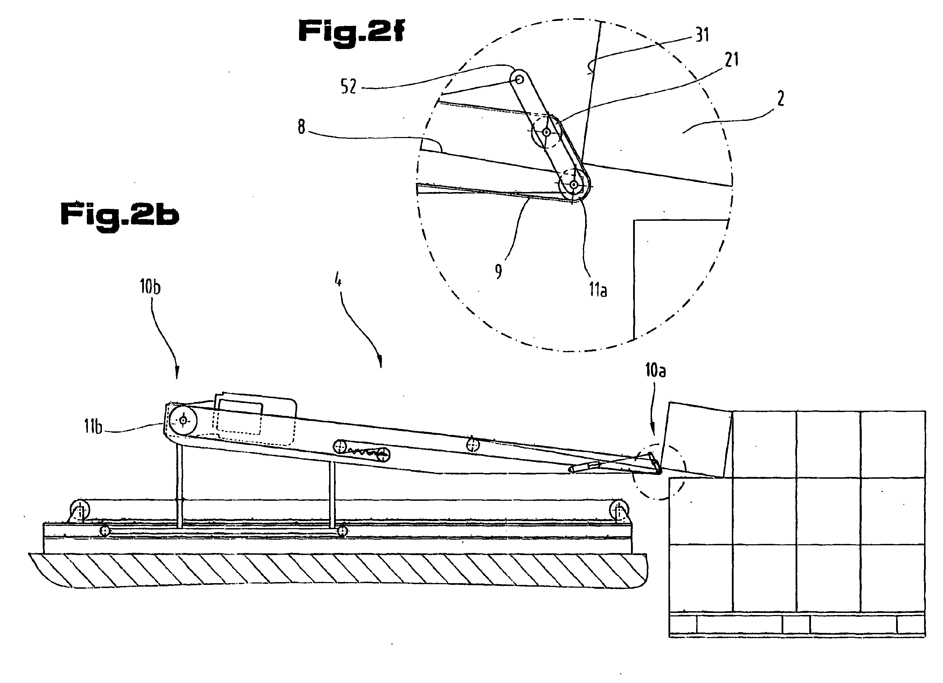

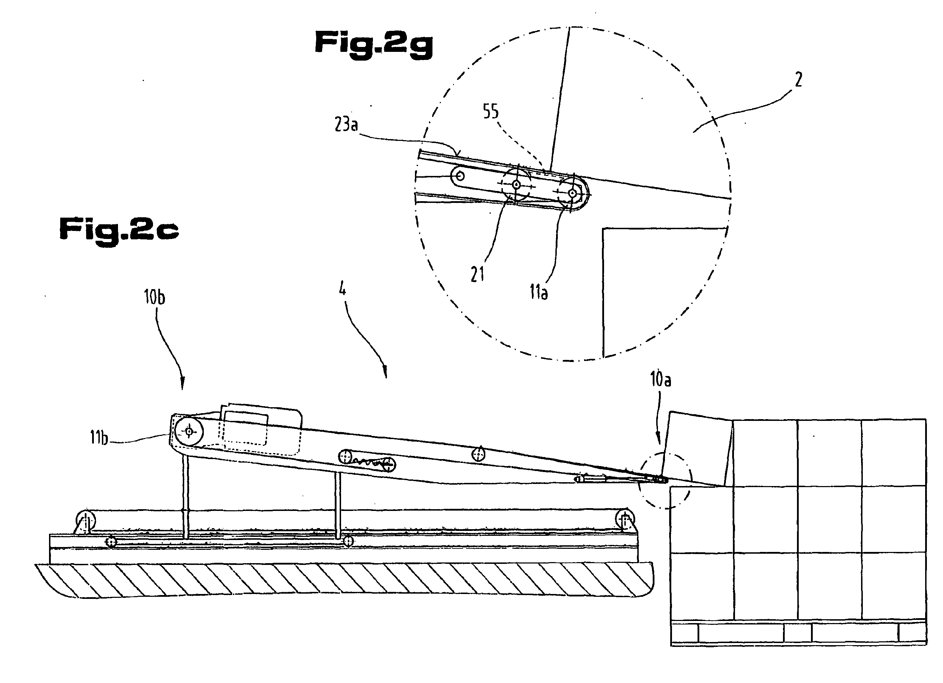

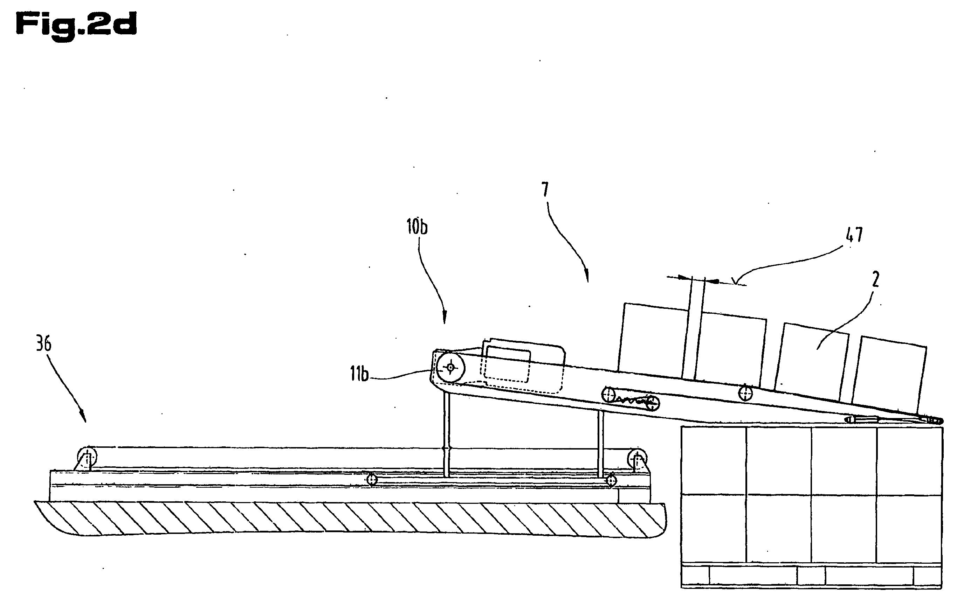

In den nachfolgenden Fig. 1a bis 1g ist eine Transportvorrichtung 1 für Ladegüter 2. beispielsweise Kartons, gezeigt, die ein in vertikaler und/oder horizontaler Richtung verstellbares Traggestell 3 und wenigstens eine an diesem gelagerte Vorrichtung 4 zur Manipulation insbesondere zur Entnahme von auf einem Ladehilfsmittel 5, insbesondere einer Palene, in mehreren Lagen 6 gestapelten Ladegütern 2 umfasst. Auch wenn im Nachfolgende vorwiegend auf die Entnahme von Ladegütern 2 Bezug genommen wird; ist es mit der erfindungsgemäßen Vorrichtung 4 nach den Fig. 1 und 2 genauso gut möglich. Ladegüter 2 von der noch näher zu beschreibenden Fördervorrichtung 7, beispielsweise auf das Ladehilfsmittel 5 abzustellen Darüber hinaus müssen die Ladegüter 2 nicht zwangsweise auf einem Ladehilfsmittel 5 aufeinander gestapelt werden, sondern können die Ladegüter 2 auch in nur einer Lage 6 hintereinander in einem Regal eines Regallagers untergebracht sein.

Die Vorrichtung 4 zur Manipulation von Ladegütern 2 besteht aus einem Rahmen 8 und einer an dieser angeordneten Fördervorrichtung 7. welche einen zugmitteltrieb mit einem endlos ausgebildeten Förderorgan 9, insbesondere ein Förderband, Fördergurt, Kette und dgl., umfasst. Das Förderorgan 9 ist umlaufend über in Ümlenkbereichen 11a, 10b gelagerte Umlenkelemente 11a. 11b und ein zwischen diesen im Rücklauftrum des Förderorgans 9 angeordnetes Umlenkelement 12 sowie ein Spannelement 13 einer Spanneinrichtung 14 geführt. Zur Abstützung des Förderorgans 9 ist zwischen den Umlenkelementen 11a. 11b mit Vertikalabstand vom ersten Umlenkelement 11a im oberen Fördertrum des Förderorgans 9 ein Stützelement 15 angebracht.

Die Spanneinrichtung 14 umfasst das am Förderorgan 9 anliegende, in einer Längsführung 16 am Rahmen 8 verschiebliche Spannelement 13. insbesondre eine Spannrolle. sowie ein am Spannelement 13 mit zum Förderorgan 9 hin gerichteter Federkraft angreifendes Stellelement 17, insbesondere eine Spannfeder. Die Spanneinrichtung 14 ist im Rücklauftrum des Förderorgans 9 zwischen den in den Umlenkbereichen 10a. 10b rahmenfest montierten Umlenkelementen 11a. 11b angeordnet und ist dazu ausgelegt, dass während dem Betrieb des Zugmitteltriebes die durch die Betriebslast entstehende Längung des Zugmittels (Förderorgans 9) als auch eine alterungsbedingte Längung des Zugmittels über das Spanelement 13 fortlaufend ausgeglichen wird und die Spannung im Zugmittel ohne Norwendigkeit der zeitweisen Nachspannung selbständig aufrecht erhalten bleibt.

Wie in den Figuren weiters eingetragen, ist das dem vorderen Ende der Fördervorrichtung 7 abgewandte Umlenkelement 11b mit einem Antrieb 18, insbesondere einem Elektromotor gekuppelt und kann von diesem wahlweise im Uhrzeigersinn oder im Gegenuhrzeigersinn derart bewegt werden, dass ein Ladegut 2 von einer Einlagerposition an einem Lagerplatz 19, beispielsweise einer Palette oder einem Regalfach und dgl., auf die Fördervorrichtung 7 oder umgekehrt manipuliert werden kann.

In einer vorteilhaften Ausführung weist die Vorrichtung 4 bzw. Fördervorrichtung 7 zusätzlich eine Verstelleinheit 20 und ein das Förderorgan 9 zumindest im Umlenkbereich 10a zwischen einer in den Fig. 1a, 1e dargestellten Entnahmestellung und einer in den Fig. 1c, 1g dargestellten Transporstellung minels der Verstelleinheit 20 bewegbares drittes Umlenkelement 21 auf.

Das Fördenrum des Förderorgans 9 ist in zwei Förderabschnitte 22a, 22b unterteilt, wovon der dem vorderen Ende der Fördervorrichtung 7 zugewandte vordere Förderabschnitt 22a eine erste Förderebene 23a und der dem vorderen Ende abgewandte hintere Förderabschnitt 22b eine zweite Förderebene 23b ausbildet.

Die Verstelleinheit 20 umfasst einen Stellantrieb 24 und einen am Rahmen 8 in Längsrichtung auf einer Linearführung 25 verschiebbaren Schlitten 26, auf dem das dritte Umlenkelement 21 mit Vertikalabstand 27 vom ersten Umlenkelement 11a gelagert ist. Die Linearführung 25 verläuft in einer zur zweiten Förderebene 23b parallelen Ebene in Förderrichtung - gemäß Pfeil 28 - der Ladegüter 2 und ist am Rahmen 8 befestigt.

Der Stellantrieb 24 ist über ein Stellmittel 29 mit dem Schlinen 26 verbunden. Der Stellantrieb 24 ist beispielsweise durch einen doppelt wirkenden Fluidzylinder, beispielsweise Pneumatik- oder Hydraulikzylinder und das Stellmittel 29 durch die Schubstange gebildet.

Das dritte Umlenkelement 21 ist mittels des Schlittens 26 in einer im Wesentlichen in der zweiten Förderebene 23b liegenden Führungsebene zwischen einer in den Fig. 1a, 1e eingetragenen vorgeschobenen Betätigungsstellung und einer in den Fig. 1c, 1g eingetragenen zurückgezogenen Ausgangsstellung relativ zum rahmenfesten ersten Umlenkelement 11a bzw. dem. Rahmen 8 verstellbar.

In der Ausgangsstellung ist das dritte Umlenkelement 21 soweit in Richtung auf das hintere Ende der Fördervorrichtung 7 zu bewegt, dass die erste Förderebene 23a in der Manipulationsebene 30, insbesondere Entnahmeebene des Ladegutes 2 liegt.

In der Betätigungsstellung, ist das dritte Umlenkelement 21 soweit in Richtung auf das vordere Ende der Fördervorrichtung 7 zu bewegt, dass die Förderebenen 23a, 23b in einer Ebene liegen und das Förderorgan 9 in die Enmahmestellung bewegt ist, in welcher es im Umlenkbereich 10a einen zur Seitenwand 31 des zu entnehmenden Ladegutes 2 annähernd planparallelen Anlageabschnitt 32 ausbildet der zur Entnahme eines Ladegutes 2 gegen besagte Seitenwand 31 mit einer Anstellkraft - gemäß eingetragenem Pfeil 33 - reibschlüssig anlegbar ist. Dabei erstreckt sich der erste Förderabschnitt 22a vom ersten Umlenkelement 11a bis zum in die Ausgangsstellung bewegten dritten Umlenkelement 21 und der zweite Förderabschnitt 22b vom dritten Umlenkelement 21 bis zum zweiten Umlenkelement 10b. wobei die Förderebenen 23a, 23b einen Winkel kleiner 180° insbesondere zwischen 160° und 175° einschlieβen, wie aus den Fig. 1c, 1g erschtlich.

Das Förderorgan 9 bildet im Anlageabschnitt 32 eine Kontaktfläche 34 bzw. ein Kontaktelement aus. Dieser Anlageabschnitt 32 hat eine Längserstreckung in Umlaufrichtung - gemäß eingetragenem Pfeil - des Förderorgans 9. die einem Mehrfachen eines Umlenkdurchmessers 35 des ersten Umlenkelementes 11a entspricht, sowie eine Breite, die annähernd einer Förderbreite des Förderorgans 9 entspricht.

Mit der dadurch erreichten Vergrößerung der Kontaktfläche 34 zwischen dem Förderorgan 9 und der Seitenwand 31. kann ein Ladegut 2 bereits mit niedrigem Anpressdruck zuverlässig in die in den Fig. 1b, 1f gekippte Stellung angehoben werden, wenn das Förderorgan 9 in Umlaufrichrung gedreht wird.

Der Vertikalabstand 27 entspricht zumindest dem 1bis 3-fachen des Umlenkdurchmessers 35.

Wie oben beschrieben. kann die Vorrichtung 4 zur Manipulation von Ladegütern 2 auf einem Traggestell 3 montiert werden welches einen über eine Antriebsvorrichtung 36 entlang einer Führungsbahn 37 verstellbaren Laufwagen 38 umfasst. Die Antriebsvorrichtung 36 ist, wie dargestellt, durch einen Zugmitteltrieb gebildet. der eine Antriebsrolie 39 und Umlenkrolle 40 sowie ein über diese geführtes, mit einem Träger 41 verbundenen und über einen nicht dargestellten Antrieb amtreibbares Zugmittel 42 umfasst. Die Träger 41 sind einerseits mit dem Rahmen 8 und andererseits mit dem Laufwagen 38 verbunden.

Das Traggesiell 3 kann beispielsweise auf einer vertikal verstellbaren Hubplanform eines Förderfahrzeuges, insbesondere Regalbediengerätes, montiert werden. In einer anderen, nicht gezeigten Ausführung, kann die Vorrichtung 4 einen Förderabschnitt eines Fördersystems bestehend aus mehreren Förderabschninen, bilden und beispielsweise die von einer Lage 6 entnommenen Ladegüter 2 an einen an den hinteren Umlenkbereich 10b unmittelbar anschließenden Förderabschnin abgeförden werden, welcher beispielsweise durch einen Rollen- oder Bandförderer und dgl. gebildet ist. In einer weiteren Ausführung kann die Vorrichtung 4 über ihren Rahmen 8 unminelbar an einem im Raum positionierbaren Roboterarm montiert werden.

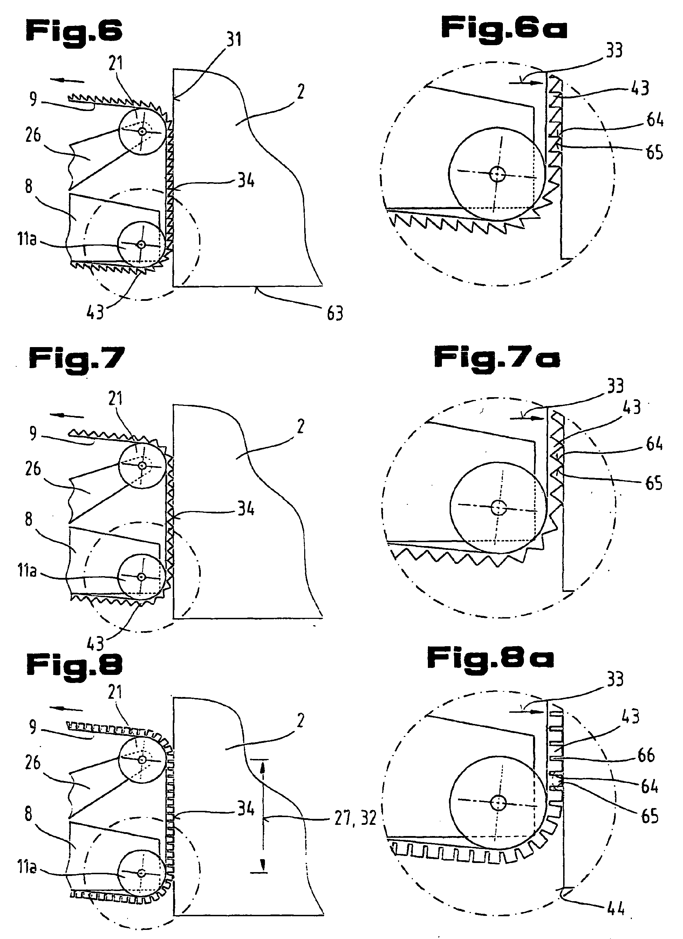

Zur Verbesserung des Reibungsverhallens zwischen dem Anlageabscchnitt 32 und der Seitenwand 31 des zu entnehmenden Ladegutes 2. kann das Förderorgan 9 an seiner dem Ladegut 2 zugewandten Außenseite mit einer auf einer Trägerlage aufgebrachten Materialschicht mit hohem Reibungskoeffizient und/oder einer Profilierung, insbesondere in Umlaufrichtung des Förderorgans 9 hintereinander parallel verlaufende Eingriffelementen 43, wie in den noch näher zu beschreibenden Fig. 6 bis 8 dargestellt, versehen werden.

Das Trägermaterial, die Materialschicht des Förderorgans 9 und/oder die Eingriffelemente 43 sind aus Kunststorff, beispielsweise Polyurethan-Elastomer, oder Kautschuk und dgl., ausgebildet und weist eine Shore-Härte A zwischen 30 und 90, insbesondere 50 und 80 auf.

Im Nachfolgenden wird anhand der Fig. 1a bis 1g der Entnahmevorgang von Ladegütern 2 vom Lagerplatz 19, insbesondere vom Ladehilfsmittel 5 auf die Fördervorrichtung 7 beschreiben. Hierzu wird die erfindungsgemäße Vorrichtung 4 vorerst seitlich neben dem Lagerplatz 19 in Höhenrichtung so weit verfahren, bis das erste Umlenkelement 11a etwas höher als die Unterseite bzw. untere Vorderkante 44 des Ladegutes 2 positioniert ist. In dieser Höhenposition befindet sich die Vorrichtung 4 in ihrer Grundstellung und werden die Ladegüter 2 der obersten Lage 6 nacheinander entnommen und auf die Fördervorrichrung 7 gefördert. Die Höhenpositionierung der Vorrichtung 4 relativ zu den Ladegütern 2 erfolgt über das beispielsweise auf einer Hubplanform eines nicht dargestellten Förderfahrzeuges montierte Traggestell 3. Anschließend wird die Vorrichtung 4 bzw. Fördervorrichtung 7 über das mittels der Antriebvorrichtung 36 horizontal verfahrbare Traggestell 3 aus der Grundstellung in Richtung auf die Ladegüter 2 in die erste Übernahmestellung bewegt, in welcher die Zustellbewegung der Vorrichtung 4 auf das zu entnehmende Ladegut 2 angehalten und das Förderorgan 9 in die Entnahmestellung verstellt wird. In der Entnahmestellung wird der Anlageabschnitt 32 gegen die Seitenwand 31 des zu entnehmenden Ladegutes 2 reibschlüssig angelegt, wie in den Fig. 1a, 1e und der Ausschninsvergrößerung dargestellt. Wenn der Anlageabschnitt 32 mit dem Ladegut 2 mit ausreichender Anstellkraft - gemäß Pfeil 33 - in Berührung gebracht wird, bewirkt die Reibung zwischen dem Anlageabschnitt 32 und dem Ladegut 2, dass das Ladegut 2 um seine untere Hinterkante aus einer Einlagerposition (Fig. 1a, 1e) in eine Entnahmeposition (Fig. 1b, 1f) angekippt wird, wenn das Förderorgan 9 in Umlaufrichtung - gemäß eingetragenem Pfeil - angetrieben wird. Das erforderliche Maß der Anstellkraft zwischen Anlageabschnitt 32 und Ladegut 2. wird durch elektrisch geregehe Zustellbewegung der Fördervorrichtung, 7 in Richrung auf das zu entnehmende Ladegut 2 in die Übernahmestellung erreicht. Dies wird erreicht, indem beispielsweise das vom als stufenlos steuerbarer Elektromotor, insbesondere Servomotor, ausgebildeten Antrieb der Antriebsvorrichtung 36 ausgeübte Drehmoment bzw. der Motorstrom auf der Zustellbewegung und/oder in der Übernahmestellung bzw. Entnahrnestellung, in der das Förderorgan 9 das Ladegut 2 mit den Anlageabschnitt 32 gegen die Seitenwand 31 angelegt wird, erfasst und dabei einer nicht dargestellten Auswerteeinheit, insbesondere einer Rechnereinheit, übermittelt wird, die ihrerseits die Istwerte der Anstellkraft ermittelt und mit Sollwerten der Anstellkraft vergleicht. Erreicht der Istwert der Anstellkraft den Sollwert der Anstellkraft, wird die Zustellbewegung vom Förderorgan 7 auf das Ladegut 2 angehalten, da die Übernahmestellung bzw. Entnahmestellung angefahren ist und die Anstellkraft jenen Wert angenommen hat, wo sichergestellt werden kann dass die Reibung zwischen Anlageabschnitt 32 und Ladegut 2 ausreichend hoch ist, um eine sichere Entnahme eines Ladegutes 2 vornehmen zu können.

Noch während die Vorderkante 44 des Ladegutes 2 vom Anlageabschnitt 32 angehoben wird. wird das Förderorgan 9 über das mittels der Verstelleinheit 20 relativ zum rahmenfesten ersten Umlenkelement 11a bewegbare dritte Umlenkelement 21 in zur Anstelkraft - gemäß Pfeil 33 - entgegen gesetzter Richtung bewegt und dabei aus seiner Entnahmestellung in die Transportstellung verstellt.

Wie in den Fig. 1b, 1f ersichtlich, erfährt die Vorrichtung 4 auf der Förderbewegung des Ladegutes 2 aus seiner Einlagerposition in die angekippte Entnahmeposition eine Rückstellbewegung, derart, dass dabei die Vorderkante 44 des Ladegutes 2 ohne Verkanrung bis annähernd zum, bevorzugt über den oberen Scheitelpunkt 45 des ersten Umlenkelementes 11a angehoben wird, worauf wiederum die Vorrichtung 4 in Richtung auf das zu entnehmende Ladegut 2 verfahren und währenddessen das Förderorgan 9 vollständig in die Transponstellung verstellt wird. Dabei wird der Förderabschnitt 22a zumindest so weit unter das Ladegut 2 verfahren, bis sich zwischen Ladegut 2 und Förderorgan 9 eine ausreichend hohe Reibung einstellt und eine zuverlässige Abförderung des Ladegutes 2 auf die Fördervorrichtung 7 erfolgen kann.

Vorzugsweise entspricht die Fördergeschwindigkeit eines Ladegutes 2 bzw. Umlaufgeschwindigkeit des Förderorgans 9 der dieser entgegen gesetzten Verfahrgeschwindigkeit der FörderVorrichtung 7, sodass der Förderabschnitt 22a an der Unterseite des Ladegutes 2 ohne Relativbewegung zum Ladegut 2 abrollt, wodurch dieses mit Erreichen der zweiten Übernahmestellung der Fördervorrichtung 7 vor dem zweiten Ladegut 2 vollständig auf dem Förderorgan 9 aufgenommen ist. Wird die Fördervorrichtung 7, an der das Förderorgan 9 gelagert ist, gleichmäßig in der durch den Pfeil 46 angegebenen Zustellrichtung bewegt, sind die Abstände 47 zwischen den Ladegütern 2 an der Fördervorrichtung 7 konstant, was für die weitere automatische Verteilung vorteilhaft ist.

Währenddem das erste Ladegut 2 der obersten Lage 6 entlang dem Fördersbschnitt 22a transponiert wird, wird die Vorrichtung 4 über die Antriebsvorrichtung 36 in Richtung auf das zweite Ladegut 2 der obersten Lage 6 soweit zubewegt, bis die Fördervorrichtung 7 die zweite Übernahmestellung erreicht, in welcher zur Entnahme des zweiten Ladegutes 2 der Anlageabschnitt 32 vom Förderorgan 9 gegen dessen Seitenwand 31 mit einer Anstellkraft reibschlüssig angelegt wird. Befindet sich das Förderorgan 9 in der Entnahmestellung vor dem zweiten Ladegut 2. ist das erste Ladegut 2 bereits vollständig am Förderabschnitt 22a aufgelagert und in einem Abstand vom zweiten Ladegut 2 entfernt.

Sind auf die oben beschriebene Weise alle Ladegüter einer Lage 6 von der Fördervorrichtung 7 entnommen und abtransportiert worden, wird die Vorrichtung 4 bzw. Fördervorrichtung 7 über die Antriebsvorrichtung 36 aus der entsprechenden Übernahmestellung wieder in die Grundstellung verfahren und durch Verstellung des Traggestelles 3 in vertikaler Richtung etwa um die Höhe eines Ladegutes 2 abwärtsbewegt, wo der Entnahmevorgang der Ladegüter 2 neuerlich vollzogen wird.

Es sei an dieser Stelle noch drauf hingewiesen, dass der Stellweg des dritten Umlenkelementes 21 zwischen der Betätigungs- und Ausgangsstellung so festgelegt, dass in der Transportstellung des Förderabschnittes 22a die Förderebene 23a in einer Manipulationsebene 30 des in die Entnahmeposition angekippten Ladegutes 2 liegt.

In den gemeinsam beschriebenen Fig. 2a bis 2g ist die Vorrichtung 4 zur Manipulation, insbesondere Entnahme von Ladegütern 2, mit einer anderen Ausführung der Verstelleinheit 50 in den jeweils unterschiedlichen Verfahrensschrinen gezeigt. Die Verstelleinheit 50 umfasst einen Stellantrieb 51 und eine im ersten Umlenkbereich 10a angeordnete Hebelanordnung 52, die mit ihrem einen Ende um eine Lagerachse 53 verschwenkbar an einem am Rahmen 8 angeordneten Lagerteil gelagert ist. Das andere Ende ist über ein Stellmittel 54 gelenkig mit einem Stellantrieb 51 verbunden. Ein besonders kompakter Aufbau der Fördervorrichtung 7 ergibt sich, wenn die Lagerachse 53 und die Drehachse von der, das erste Umlenkelement 11a bildenden rahmenfesten Umlenkrolle zusammenfallen. Dadurch bildet die Drehachse der Umlenkrolle gleichzeitig den Lagerteil für die Lagerachse 53.

Wie in den Figuren weiters ersichtlich, ist an der Hebelanordnung 52 mit Abstand zur Lagerachse 53 das drine Umlenkelement 21 angeordnet, welches bevorzugt durch eine Umlenkrolle gebildet und an der Hebelanordnung 52 drehbar gelagert ist. Der Stellantrieb 51 ist beispielsweise durch einen Fluidzylinder und das Stellmittel 54 durch dessen Schubstange gebildet.

Das Förderorgan 9 ist zumindest in einem der Umlenkbereiche 10a minels des zwischen einer Betätigungsstellung (Fig. 2a, 2e) und einer Ausgangsstellung (Fig. 2c, 2g) über den Stellantrieb 51 bewegbaren dritten Umlenkelementes 21 zwischen der Entnahmestellung (Fig. 2a 2e) und Transportstellung (Fig. 2c 2g) verstellbar ausgebildet. In der Entnahmestellung bildet das Förderorgan 9 wiederum den zur Seitenwand 31 parallelen, vorzugsweise annähernd lotrechten AnJageabschnitt 32 aus, dessen Kontaktfläche 34 eine Längserstreckung in Umlaufrichtung des Förderorgans 9 aufweist, die einem Mehrfachen des Umlenkdurchmessers 35 des ersten Umlenkelementes 10a entspricht, und eine Breite aufweist, die annähernd der Förderbreite des Förderorgans 9 entspricht.

Wie in den Fig. 2c, 2g in strichlierten Linien eingetragen, kann die Hebelanordnung 52 auf der dem Förderorgan 9 zugewandten Seite zwischen den Umlenkelementen 11a, 21 ein sich über die gesamte Breite des Förderorgans 9 erstreckendes Stützprofil 55 aufweisen, die eine Stützfläche ausbildet, an der das Förderorgan 9 gleitet. Dadurch wird eine noch verbesserte Abstützung des Förderorgans 9 im Umlenkbereich 10a erreicht und eine zuverlässige Entnahme sowie eine ruhige Beförderung der Ladegüter 2 ermöglicht.

Die Entnahme und der Transport der Ladegüter 2 erfolgt auf dieselbe An und Weise, wie oben in den Fig. 1a bis 1g beschrieben.

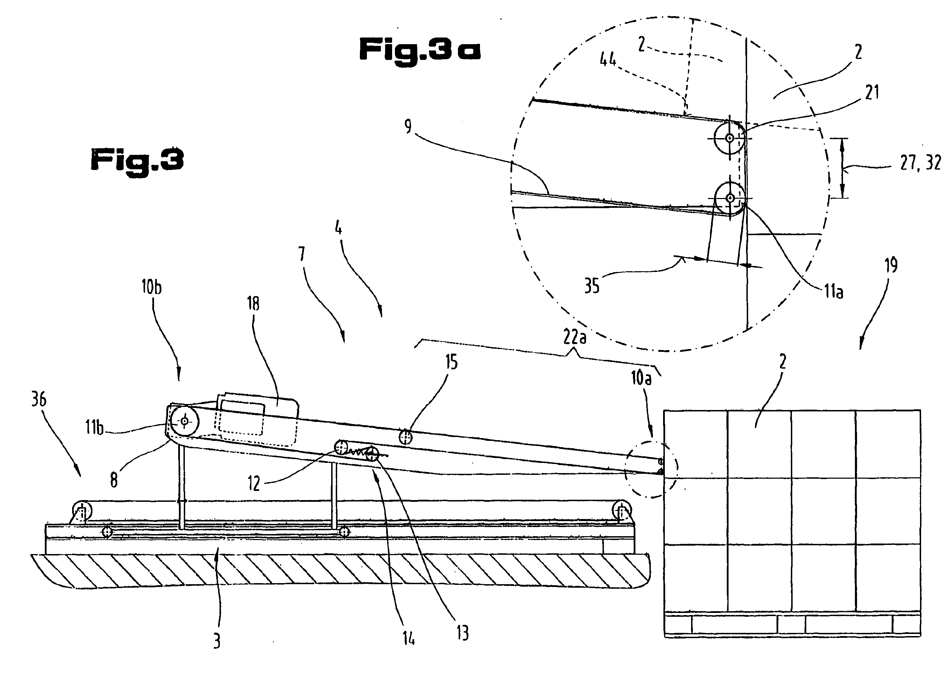

In den Fig. 3, 3a ist eine weitere Ausführungsvariante der erfindungsgemäßen Vorrichtung 4 zur Manipulation, insbesondere Entnahme von Ladegütern 2 gezeigt. Die Fördervorrichtung 7 umfasst im ersten Umlenkbereich 10a vertikal übereinander angeordnete rahmenfeste Umlenkelemente 11a, 21, im gegenüber liegenden Umlenkbereich 10b das Umlenkelement 11b, dem oberen Fördertrum des Förderorgans 9 zugeordnet das Stützelement 15 sowie im unteren Rücklauftrum ein Umlenkelement 12 sowie die Spanneinrichtung 14. Das Förderorgan 9 der Fördervorrichtung 7 ist um die Umlenkelement 11a, 11b, 12, 21 und das Spannelement 13 geführt und wird vom Stützelement 15 am Fördertrum gestützt. Die Umlenkelemente 11a, 11b, 12, 21 sind durch Umlenkrollen gebildet, die jeweils rahmenfeste achsparallele Drehachsen aufweisen. Das erste und drirte Umlenkelement 11a, 21 sind mit Vertikalabstand 27 deran übereinander angeordnet, dass das Förderorgan 9 das erste und dritte Umlenkelement 11a, 21 jeweils zumindest um 45° umschlingt und zwischen diesen den lotrechten Anlageabschnitt 32 ausbildet. Der Vertikalabstand 27 entspricht zumindest dem 1 bis 1,5-fachen des Umlenkdurchmessers 35 des Umlenkelementes 11a.

Nach dieser Ausführung wird die Vorrichtung 4 zur Entnahme eines Ladegutes 2 über die Antriebsvorrichtung 36 in Richtung auf das zu entnehmende Ladegut 2 in die Übemahmestellung, wie die Fig. 3, 3a zeigen, bewegt, in welcher das Ladegut 2 aus einer Einlagerposition, wie in vollen Linien eingetragen, in eine Entnahmeposition, wie in strichlierten Linien in der Ausschnittsvergrößerung dargestellt, angekippt und dabei die Vorderkante 44 des Ladegutes 2 angehoben. Wenn das Ladegut 2 seine gekippte Entnahmeposition erreicht, ist die Vorderkante 44 des Ladegutes 2 bis über das drine Umlenkelement 21 angehoben, sodass der Förderabschnitt 22a unter das Ladegut 2 einfahren kann, wobei während der Zustellbewegung der Vorrichtung 7 in Richtung auf das Ladegut 2 das Förderorgan 9 in entgegen gesetzter Richtung angetrieben wird, sodass das Förderorgan 9 an der Unterseite des Ladegutes 2 ohne Relativverschiebung zum Ladegut 2 abrollt.

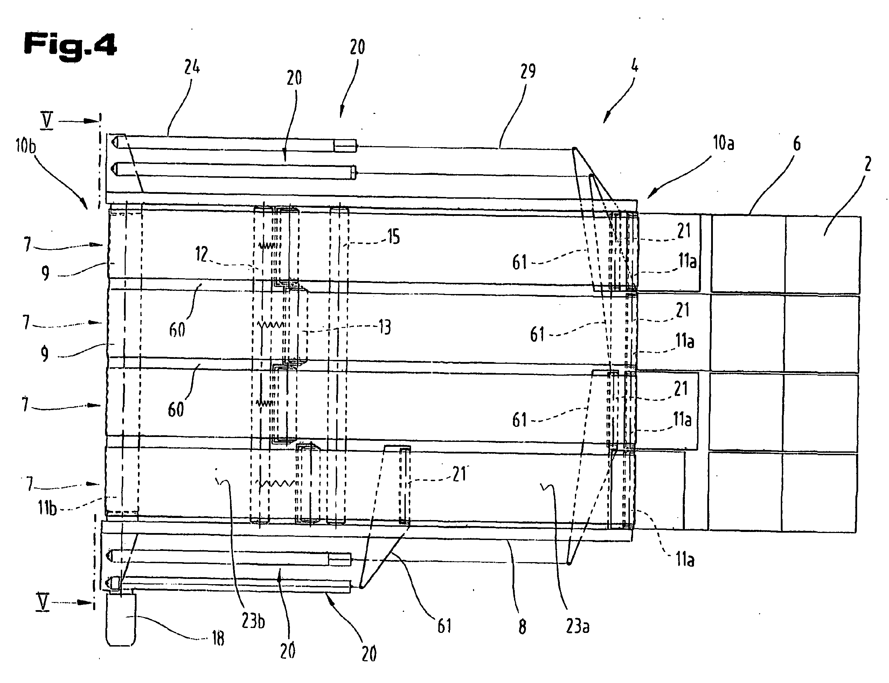

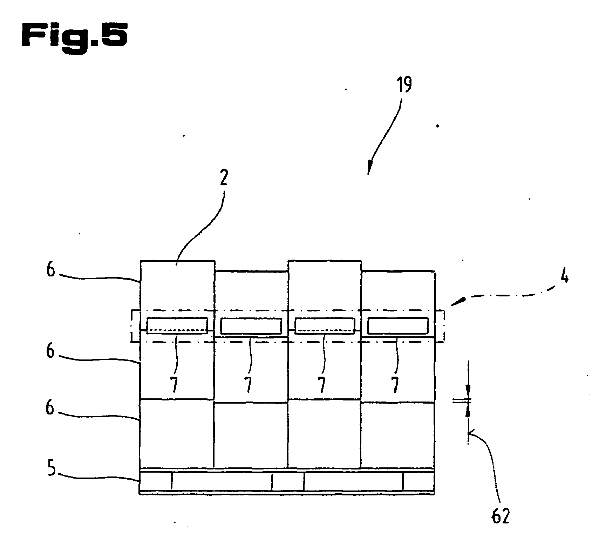

In den gemeinsam beschriebenen Fig. 4 und 5 ist eine weitere Ausführungsvariante der erfindungsgemäßen Vorrichtung 4 zur Manipulation, insbesondere Entnahme von Ladegütern 2 in unterschiedlichen Ansichten gezeigt. Die Vorrichtung 4 weist den Rahmen 8 und mehrere an diesem angeordnete Fördervorrichtungen 7 auf, wovon eine jede das zwischen seitlichen Längsschienen 60 laufende, endlose Förderorgan 9 und eine Verstelleinheit 20 zur Verstellung des dritten Umlenkelementes 21 zwischen der Ausgangs- und der Betätigungsstellung umfasst. Das Förderorgan 9 jeder Fördervorrichtung 7 ist umlaufend über in Umlenkbereichen 10a, 10b gelagerte Umlenkelemente 11a, 11b und ein zwischen diesen im Rücklauftrum des Förderorgans 9 angeordnetes Umlenkelement 12 sowie ein Spannelement 13 geführt. Zur Abstützung jedes Förderorgans 9 ist im oberen Fördertrum ein Stützelement 15 angebracht. Um ein möglichst einfaches Antriebskonzept bereitzustellen, sind die Förderorgane 9 aller Fördervorrichtungen 7 um eine gemeinsame und an den Antrieb 18 gekuppelte Umlenkrolle geführt, sodass die Förderorgane 9 synchron mit gleicher Umlaufgeschwindigkeit umlaufen. Steht hingegen eine besonders flexible Förderung von Ladegütern 2 im Vordergrund, so kann jede Fördervorrichtung 7 einen eigenen Antrieb 18 (nicht dargestellt) aufweisen, wovon jeder mit einer, jede Fördervorrichtung 7 aufweisende Umlenkrolle im Umlenkbereich 10b gekuppeh ist. Dadurch können die Fördervorrichtungen 7 wahlweise und unabhängig voneinander betrieben werden.

Jede Fördervorrichtung 7 ist bevorzugt über Kupplungsvorrichtungen (nicht dargestellt) auswechselbar am Rahmen S der Vorrichtung 4 angeordnet.

Wie in Fig. 4 ersichtlich, kann das Förderorgan 9 einer jeden Fördervorrichtung 7 zumindest in einem der Umlenkbereiche 10a minels des zwischen einer Betätigungs- und Ausgangsstellung über einen Schlitten 61 bewegbaren dritten Umlenkelementes 21 zwischen der Entnahmestellung und Transportsiellung verstellt werden. Jede Verstelleinheit 20 umfasst einen Stellantrieb 24 und den am Rahmen 8 in Längsrichtung auf einer Linearführung (nicht dargestellt) verschiebbaren Schlitten 61, auf dem das dritte Umlenkelement 21 mit Vertikalabstand (nicht eingetragen) vom ersten Umlenkelement 11a gelagert ist leder Schlinen 61 ist über ein Stellmittel 29 mit dem Stellantrieb 24 verbunden. Nachdem die Verstelleinheiten 20 unabhängig voneinander angesteuert werden können, ist eine wahlweise Entnahme von Ladegütern 2 aus der obersten Lage 6 der nebeneinander gestapelten Ladegüter 2 möglich.

Auch wenn in Fig. 4 die Verstelleinheit 20 nach dem Prinzip gemäß den Fig. 1a bis 1g dargestellt ist, ist es genauso gut möglich, dass die Verstelleinheit gemäß der Ausführung in den Fig. 2a bis 2g ausgebildet ist. Anderenfalls können die Fördervorrichtungen 7 auch nach der in Fig. 3, 3a dargestellten Ausführung aufgebaut werden.

Der Entnahmevorgang eines Ladegutes 2 vom Lagerplatz 19 erfolgt auf die selbe An und Weise, wie oben ausführlich erläutert, mit dem Vorteil, dass wahlweise alle Ladegüter 2 gleichzeitig oder nur einzelne Ladegüter 2 der obersten Lage 6 entnommen werden können, indem vor jedem zu entnehmenden Ladegut 2 das entsprechende Förderorgan 9 in der Entnahmestellung so verstellt wird, dass es einen zur Seitenwand 31 des zu enmehmenden Ladegutes 2 parallelen Anlageabschnitt 32 ausbildet, der zur Entnahme gegen die Seitenwand 31 des Ladegutes 2 angelegt wird. Ist hingegen aus der obersten Lage 6 ein einzelnes Ladegut 2 zu entnehmen, wird ausschließlich jenes der entsprechenden Entnahmeposition bzw. dem zu entnehmenden Ladegut 2 zugeordnete Förderorgan 9 in der Entnahmestellung so verstellt, dass der Anlageabschnitt 32 gegen die Seitenwand 31 des Ladegutes 2 angelegt werden kann.

Wie in Fig. 5 schematisch dargestellt, kann durch die Lagerung der Ladegüter 2 in mehreren Lagen 6 zwischen nebeneinander liegenden Ladegütern 2 ein Höhenversatz 62 auftreten. Ist mit einem solchen Höhenversatz 62 zu rechnen, erweist es sich von Vorteil, wenn jede der Fördervorrichtungen 7 getrennt durch einen Antrieb 18 angesteuert wird und die Vorrichtung 4 von einer elektronischen Rechnereinheit (nicht dargestellt) gesteuert in Höhenrichtung so weit verfahren wird, bis das erste Umlenkelement 11a etwas höher als die Unterseite eines Ladegutes 2 an der zu bedienenden Einlagerposition positioniert ist. Die Rechnereinheit kann dabei beispielsweise von einer Sensorik (nicht dargestellt) zur Erfassung eines Höhenversatzes 62 Signale erhalten, welche einer Auswerteeinheit übermittelt werden, die ihrerseits die Ansteuerung der einzelnen Antriebe 18 Der Fördervorrichtungen 7 entsprechend den Sensorsignalen vornimmt. Zuvor werden entsprechend dem Höhenversatz 62 die Vorrichtung 4 und das zu entnehmende Ladegut 2 oder die zu entnehmenden Ladegüter 2 in Höhenrichtung so zueinander positioniert, dass sich die jeweilige Fördervorrichtung 7 in einer von der Rechnereinheit ermittelten entsprechenden Übernahmestellung befindet.

In den Fig. 6 bis 8 sind unterschiedliche Ausführungen des Förderorgans 9 dargestellt.

Das Förderorgan 9 nach den Fig. 6, 6a und 7, 7a bildet beispielsweise ein Sägezahnprofil aus und weist auf der den Umlenkelementen 11a, 21 gegenüberliegenden Außenseite in Umlaufrichrung des Förderorgans 9 hintereinander angeordnete und vorzugsweise parallel verlaufende Eingriffselemente 43 auf, die aus elastisch nachgiebig reversiblen Kunststoff beispielsweise Thermoplast, bestehen und in einer möglichen Ausführung in der Entnahmestellung unter Einwirkung der Anstellkraft - gemäß Pfeil 33 - elastisch verformbar ausgebildet sind, wie die Ausschnittsvergrößerungen zeigen. Die asymmetrischen Eingriffselemente 43 vom Förderorgan 9 nach den Fig. 6, 6a sind in ihrer unbelasteten Ausgangsstellung unverformt und bilden einen dreieckigen Querschnitt mit einer der Unterseite 63 des Ladegutes 2 zugewandten steilen Flanke 64 und einer der zu ergreifenden Seitenwand 31 zugewandten flachen Flanke 65 aus. Während die steilen Flanken 64 zur Längsrichtung des Förderorgans 9 im Wesentlichen senkrecht sind, beträgt ein Neigungswinkel der Flanken 65 gegenüber der Längsrichtung etwa zwischen 30° und 45°. Die symmetrischen Eingriffselemente 43 vom Förderorgan 9 nach den Fig. 7, 7a bilden einen dreieckigen Querschnitt aus, wobei jeweils die Flanken 64, 65 symmetrisch zu einer auf die den Umlenkelementen 11a, 21 zugewandte Lauffläche senkrecht ausgerichtete Achse verlaufen.

Nach den Fig. 8, 8a bildet das Förderorgan 9 beispielsweise ein kammprofil aus und weist durch nutartige Freiräume 66 voneinander getrennte und in Umlaufrichtung des Förderorgans 9 parallel verlaufende Eingriffselemente 43 auf. Diese Ausführung erweist sich von Vorteil, da zusätzlich zur Reibungsberührung zwischen Anlageabschnitt 32 und Ladegut 2 auf der Förderbewegung des Ladegutes 2 aus der Einlagerposition in die Entnahmeposition die Vorderkante 44 in einen Freiraum 63 eintauchen und gegen eine diese seitlich begrenzende Flanke 65 abstützbar ist, sodass der Entnahmevorgang auf besonders zuverlässige Weise erfolgen kann. Die Eingriffselemente 43 bilden gemäß den Ausführungen eine profilartige Kontaktfläche 34 aus, die reibschlüssig gegen die Seitenwand 31 angelegt wird.

Abschließend sei noch drauf hingewiesen, dass die Umlenkelemente 11a, 11b, 12, das Spannelement 13 und Stützelement 15 am Rahmen 8 gelagen und vorzugsweise als Umlenk-Spann- und Stützrollen mit parallelen Drehachse ausgebildet sind. Anderenfalls können die Umlenk-, das Spann- und/oder Stützelemente 11a, 11b, 12, 13, 15 einen Stützkörper ausbilden, welcher am Rahmen 8 und/oder Schlitten 26; 61 montiert ist und das Förderorgan 9 um eine der Stützkörper aufweisende Gleitfübrung herumführt.

Der Ordnung halber sei abschließend darauf hingewiesen, dass zum besseren Verständnis des Aufbaus der Vorrichtung 4 diese bzw. deren Bestandteile teilweise unmaßstäblich und/oder vergrößert und/oder verkleinert dargestellt wurden.

Vor allem können die einzelnen in den Fig. 1a bis 1g; 2a bis 2g; 3, 3a; 4; 5; 6; 7 und 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Transportvorrichtung
- 2: Ladegut
- 3: Traggestell
- 4: Vorrichtung
- 5: Ladehilfsmittel

- 6: Lage
- 7: Fördervorrichtung
- 8: Rahmen
- 9: Förderorgan
- 10a: Umlenkbereich
- 10b: Umlenkbereich

- 11a: Umlenkelement
- 11b: Umlenkelement
- 12: Umlenkelement
- 13: Spannelement
- 14: Spanneirichtung
- 15: Stützelement

- 16: Längsführung
- 17: Stellelement
- 18: Antrieb
- 19: Lagerplatz
- 20: Verstelleinheit

- 21: Umlenkelement
- 22a: Förderabschnitt
- 22b: Förderabschnitt
- 23a: Förderebene
- 23b: Förderebene
- 24: Stellantrieb
- 25: Linearführung

- 26: Schlitten
- 27: Vertikalabstand
- 28: Förderrichtung
- 29: Stellmittel
- 30: Manipulationsebene

- 31: Seitenwand
- 32: Anlageabschnitt
- 33: Anstellkraft
- 34: Kontaktfläche
- 35: Umlenkdurchmesser

- 36: Antriebsvorrichtung
- 37: Führungsbahn
- 38: Laufwagen
- 39: Antriebsrolle
- 40: Umlenkrolle

- 41: Träger
- 42: Zugmittel
- 43: Eingriffselement
- 44: Vorderkante
- 45: Scheitelpunkt

- 46: Zustellrichtung
- 47: Abstand

- 50: Verstelleinheit

- 51: Stellantrieb
- 52: Hebelanordnung
- 53: Lagerachse
- 54: Stellmittel
- 55: Stützprofil

- 60: Längsschiene

- 61: Schlitten
- 62: Höhenversatz
- 63: Unterseite
- 64: Flanke
- 65: Flanke

- 66: Freiraum

## Patentansprüche

1. Vorrichtung (4) zur Entnahme von Ladegütern (2) von einem Lagerplatz (19), beispielsweise einem Ladehilfsmittel (5), die ein über an einem Rahmen (8) gelagerte Umlenkelemente (11a, 11b) geführtes und über einen Antrieb (18) antreibbares Förderorgan (9) einer Fördervorrichtung (7) sowie eine in einer Übernahmestellung gegen die dem Förderorgan (9) zugewandte Seitenwand (31) wenigstens eines Ladegutes (2) reibschlüssig anlegbare Kontaktfläche (34) aufweist; welche derart bewegbar ist, dass wenigstens ein Ladegut (2) durch die Reibungsberührung nach oben bewegt wird, **dadurch gekennzeichnet, dass** das Förderorgan (9) in der Übernahmestellung zumindest in einem der Umlenkbereiche (10a, 10b) einen zur Seitenwand (31) des Ladegutes (2) im Wesentlichen parallelen, annähernd lotrechten Anlageabschnitt (32) ausbildet, der zur Entnahme eines Ladegutes (2) gegen dessen Seitenwand (31) anlegbar ist und die Kontaktfläche (34) bildet sowie eine Längserstreckung in Umlaufsrichtung des Förderorgans (9) aufweiset, die einem Mehrfachen des Umlenkdurchmessers (35) eines, im dem zu entnehmenden Ladegut (2) benachbarten ersten Umlenkbereich (10a) angeordneten ersten Umlenkelementes (11a) entspricht.

2. Vorrichtung nach Anspruch 1, **dadurch gekennzeichnet, dass** die Fördervorrichtung (7) eine Verstelleinheit (20; 50) und ein das Förderorgan (9) zumindest in einem der Umlenkbereiche (10a, 10b) zwischen einer Entnahmestellung und Transponstellung mittels der Verstelleinheit (20; 50) bewegbares drittes Umlenkelement (21) aufweist und das Förderorgan (9) in der Enmahmestellung den annähernd lotrechten Anlageabschnitt (32) und in der Transportstellung einen gegenüber einer Horizontalebene geneigten Förderabschnitt (22a) ausbildet.

3. Vorrichtung nach Anspruch 2, **dadurch gekennzeichnet, dass** die Verstelleinheit (50) einen Stellantrieb (51) und eine im ersten Umlenkbereich (10a) angeordnete und um eine Lagerachse (53) schwenkbar am Rahmen (8) gelagerte Hebelanordnung (52) aufweist an der im Abstand zur Lagerachse (53) das dritte Umlenkelement (21) angeordnet und welche mit dem Stellantrieb (51) verbunden ist.

4. Vorrichtung nach Anspruch 2, **dadurch gekennzeichnet, dass** die Verstelleinheit (20) einen Stellantrieb (24) und einen am Rahmen (8) in Längsrichtung auf einer Linearführung (25) verschiebbaren Schlitten (26) aufweist, auf dem das dritte Umlenkelement (21) mit Vertikalabstand (27) vom ersten Umlenkelement (10a) gelagert und welcher mit dem Stellantrieb (24) verbunden ist.

5. Vorrichtung nach Anspruch 1, **dadurch gekennzeichnet, dass** die Fördervorrichtung (7) ein am Rahmen (8) gelagertes, drittes UmlenKelement (21) aufweist, das im ersten Umlenkbereich (10a) und mit Vertikalabstand (27) vom ersten Umlenkelement (11a) derart angeordnet ist, dass Förderorgan (9) das erste und dritte Umlenkelement (11a, 21) mindestens um 45° umschlingt und zwischen dem ersten und dritten Umlenkelement (11a, 21) der Anlageabschnitt (32) ausgebildet ist.

6. Vorrichtung nach Anspruch 1, **dadurch gekennzeichnet, dass** diese mehrere am Rahmen (8) gelagerte Fördervorrichtungen (7) aufweist, die einen gemeinsamen Antrieb (18) oder jede davon einen eigenen Antrieb (18) umfasst und nach einem der Ansprüche 1 bis 5 ausgebildet ist.

7. Vorrichtung nach Anspruch 1, **dadurch gekennzeichnet, dass** das endlos ausgebildete Förderorgan (9) auf der den Umlenkelementen (11a, 21) abgewandten Außenseite Eingriffselemente (43) aufweist, welche vorzugsweise eine profilartige Kontaktfläche (34) aufweisen.

8. Vorrichtung nach Anspruch 1, **dadurch gekennzeichnet, dass** die Eingriffselemente (43) durch einen elastisch nachgiebig reversiblen Kunststoff, beispielsweise Thermoplast, gebildet sind und in der Entnahmestellung unter Einwirkung der Anstellkraft (33) auf die Seitenwand (31) elastisch verformbar ausgebildet sind.

9. Vorrichtung nach Anspruch 1, **dadurch** gekennnzeichnet, dass das Förderorgan (9) zwischen den Eingriffselementen (43) durch Flanken (64, 65) seitlich begrenzte Freiräume (66) aufweist, die derart ausgebildet sind, dass auf der Förderbewegung eines Ladegutes (2) zwischen einer horizontalen Einlagerposition und einer angekippten Entnahmeposition eine Vorderkante (44) in einen der Freiräume (66) vordringt und sich an einer Flanke (64, 65) abstützt.

10. Transportvorrichtung (1) für Ladegüter (2) mit einem in vertikaler und/oder horizonialer Richtung verstellbaren Traggestell (3), **dadurch gekennzeichnet, dass** diese eine am Traggestell (3) gelagerte und nach einem der Ansprüche 1 bis 9 ausgebildete Vorrichtung (4) zur Entnahme von Ladegütern (2) von einem Lagerplatz (19) umfasst.

11. Verfahren zur Entnahme von Ladegütern (2) von einem Lagerplatz (19), beispielsweise einem Ladehilfsmittel (5) mittels einem Förderorgan (9) einer Fördervorrichtung (7) und einer Kontaktfläche (34), bei dem in einer Übernahmestellung die Kontaktfläche (34) gegen die dem Förderorgan (9) zugewandte Seitenwand (31) wenigstens eines Ladegutes (2) reibschlüssig angelegt und derart bewegt wird, dass wenigstens ein Ladegut (2) durch die Reibungsberührung nach oben bewegt und auf das Förderorgan (9) gefördert wird, **dadurch gekennzeichnet, dass** die Fördervorrichtung (7) in Richtung auf wenigstens ein Ladegut (2) in die Übernahmestellung bewegt wird, in welcher ein vom Förderorgan (9) zumindest in einem der Umlenkbereiche (10a, 10b) ausgebildeter und zur Seitenwand (31) des Ladegutes (2) im Wesentlichen paralleler, annähernd lotrechter Anlageabschnitt (32) gegen die Seitenwand (31) des Ladegutes (2) reibschlüssig angelegt wird.

12. Verfahren nach Anspruch 11, **dadurch gekennzeichnet, dass** das Förderorgan (9) bei der Entnahme wenigstens eines Ladegutes (2) über ein zum rahmenfesten ersten Umlenkelement (11a) relativ bewegbares drittes Umlenkelement (21) aus einer Entnahmestellung in die Transponstellung verstellt wird, wobei vom Förderorgan (9) in der Entnahmestellung der annähernd lotrechte Anlageabschnitt (32) und in der Transportstellung ein gegenüber einer Horizontalebene geneigter Förderabschnitt (22a) ausgebildet wird.

## Claims

1. Device (4) for removing freight articles (2) from a storage space (19), for example a loading aid (5), comprising a conveyor element (9) of a conveyor device (7) guided by deflector elements (11a, 11b) mounted on a frame (8) and drivable by a drive (18), having a contact surface (34) against which the side wall (31) of at least one freight article (2) facing the conveyor element (9) can be placed in a friction contact when in a transfer position, which can be moved so that at least one freight article (2) can be moved upwards due to the friction contact, **characterised in that** in the transfer position , the conveyor element (9) forms an approximately perpendicular contract portion (32) disposed essentially parallel with the side wall (31) of the freight article (2) in at least one of the deflection regions (10a, 10b) which, in order to remove a freight article (2), can be placed against its side wall (31) and forms the contact surface (34), and has a longitudinal extension in the direction of circulation of the conveyor element (9) corresponding to a multiple of the deflection diameter (35) of a first deflector element (11a) disposed in the first deflection region (10a) adjacent to the freight article (2) to be removed.

2. Device as claimed in claim 1, **characterised in that** the conveyor device (7) has a displacement unit (20; 50) and a third deflector element (21) displaceable by means of the displacement element (20; 50) which is able to move the conveyor element (9) at least in one of the deflection areas (10a, 10b) between a removal position and a conveying position, and the conveyor element (9) serves as the approximately perpendicular contact portion (32) in the removal position and forms a conveyor portion (22a) inclined with respect to a horizontal plane in the transport position.

3. Device as claimed in claim 2, **characterised in that** the displacement unit (50) comprises an actuator drive (51) and a lever arrangement (52) disposed in the first deflection region (10a) and mounted so as to be pivotable about a bearing axis (53) on the frame (8), on which the third deflection element (21) is disposed at a distance from the bearing axis (53), and which is connected to the actuator drive (51).

4. Device as claimed in claim 2, **characterised in that** the displacement unit (20) comprises an actuator drive (24) and a carriage (26) which is able to move in translation on the frame (8) in the longitudinal direction on a linear guide (25), on which the third deflection element (21) is mounted at a vertical distance (27) from the first deflection element (10a), and which is connected to the actuator drive (24).

5. Device as claimed in claim 1, **characterised in that** the conveyor device (7) has a third deflection element (21) mounted on the frame (8), which is disposed in the first deflection area (10a) and at a vertical distance (27) from the first deflection element (11a) so that the conveyor element (9) loops around the first and third deflection element (11a, 21) by at least 45° and the contact portion (32) is formed between the first and third deflection element (11a, 21).

6. Device as claimed in claim 1, **characterised in that** it has several conveyor devices (7) mounted on the frame (8), which have a common drive (18) or each have a separate drive (18) and is as claimed in one of claims 1 to 5.

7. Device as claimed in claim 1, **characterised in that** the endless conveyor element (9) has locating elements (43) on the external face remote from the deflector elements (11a, 21), which preferably have a profiled contact surface (34).

8. Device as claimed in claim 1, **characterised in that** the locating elements (43) are provided in the form of an elastically flexible, reversible plastic, for example thermoplastic material, and are designed so that they are able to deform elastically in the removal position due to the effect of the contact force (33) on the side wall (31).

9. Device as claimed in claim 1, **characterised in that** the conveyor element (9) has gaps (66) between the locating elements (43) laterally bounded by flanks (64, 65), which are designed so that a front edge (44) extends into one of the gaps (66) and is supported on a flank (64, 65) during the movement of conveying a freight article (2) between a horizontal stowing position and a tilted removal position.

10. Conveyor device (1) for freight articles (2) with a support frame (3) adjustable in the vertical and/or horizontal direction, **characterised in that** it has a device (4) as claimed in one of claims 1 to 9 mounted on the support frame (3) for removing freight articles (2) from a storage space (19).

11. Method of removing freight articles (2) from a storage space (19), for example a loading aid (5), by means of a conveyor element (9) of a conveyor device (7) and a contact surface (34), whereby the contact surface (34) is placed against the side wall (31) of at least one freight article (2) facing the conveyor element (9) in a friction contact and moved so that at least one freight article (2) is moved upwards due to the friction contact and is conveyed on the conveyor element (9), **characterised in that** the conveyor device (7) is moved in the direction of at least one freight article (2) into the transfer position in which an approximately perpendicular contact portion (32) formed by the conveyor element (9) in at least one of the deflection regions (10a, 10b) disposed essentially parallel with the side wall (31) of the freight article (2) is placed against the side wall (31) of the freight article (2) in a friction contact.

12. Method as claimed in claim 11, **characterised in that** the conveyor element (9) is moved out of a removal position into the conveying position by a third deflection element (21) which can be moved relative to the first deflection element (11a) fixedly mounted on the frame when removing at least one freight article (2), and the approximately perpendicular contact portion (32) is formed by the conveyor element (9) in the removal position and by a conveyor portion (22a) inclined with respect to a horizontal plane in the conveying position.

## Revendications

1. Dispositif (4) pour l'enlèvement de marchandises (2) d'un parc de stockage (19), par exemple d'un moyen auxiliaire de chargement (5) qui présente un organe de convoyage (9) d'un dispositif de convoyage (7) guidé par des éléments de renvoi (11a, 11b) logés à un châssis (8) et apte à être entraîné par une commande (18) ainsi qu'une face de contact (34) applicable par friction dans une position de reprise contre la paroi latérale (31) orientée vers l'organe de convoyage (9) d'au moins une marchandise (2), qui est déplaçable de telle sorte qu'au moins une marchandise (2) est déplacée par le contact de friction vers le haut, **caractérisé en ce que** l'organe de convoyage (9), en position de reprise, réalise au moins dans une des zones de renvoi (10a, 10b) une section d'application (32) approximativement verticale, sensiblement parallèle à la paroi latérale (31) de la marchandise (2), qui est applicable pour l'enlèvement d'une marchandise (2) contre sa paroi latérale (31) et forme la face de contact (34) et présente une extension longitudinale dans la direction périphérique de l'organe de convoyage (9) qui correspond à un multiple du diamètre de renvoi (35) d'un premier élément de renvoi (11a) disposé dans la première zone de renvoi (10a) avoisinant la marchandise (2) à enlever.

2. Dispositif selon la revendication 1, **caractérisé en ce que** le dispositif de convoyage (7) présente une unité de déplacement (20; 50) et un troisième élément de renvoi (21) déplaçable dans une des zones de renvoi (10a, 10b) entre une position d'enlèvement et une position de transport au moyen de l'unité de déplacement (20; 50), et l'organe de convoyage (9), en position d'enlèvement, réalise la section d'application approximativement verticale (32) et, en position de transport, une section de convoyage (22a) inclinée par rapport à un plan horizontal.

3. Dispositif selon la revendication 2, **caractérisé en ce que** l'unité de déplacement (50) présente une commande de positionnement (51) et un agencement de levier (52) disposé dans la première zone de renvoi (10a) et logé au châssis (8) d'une manière pivotante autour d'un axe de palier (53), auquel est disposé à une distance de l'axe de palier (53) le troisième élément de renvoi (21) et qui est relié à la commande de positionnement (51).

4. Dispositif selon la revendication 2, **caractérisé en ce que** l'unité de déplacement (20) présente une commande de positionnement (24) et un chariot (26) déplaçable au châssis (8) dans la direction longitudinale sur un guidage linéaire (25), sur lequel est logé le troisième élément de renvoi (21) avec un espacement vertical (27) du premier élément de renvoi (10a) et qui est relié à la commande de positionnement (24).

5. Dispositif selon la revendication 1, **caractérisé en ce que** le dispositif de convoyage (7) présente un troisième élément de renvoi (21) logé au châssis (8), qui est disposé dans la première zone de renvoi (10a) et à un espacement vertical (27) du premier élément de renvoi (11a) de façon que l'organe de convoyage (9) entoure le premier et le troisième élément de renvoi (11a, 21) selon au moins 45° et qu'il est réalisé entre le premier et le troisième élément de renvoi (11a, 21) la section d'application.

6. Dispositif selon la revendication 1, **caractérisé en ce que** celui-ci présente plusieurs dispositifs de convoyage (7) logés au châssis (8), qui comprend un entraînement commun (18) ou chacun de ceux-ci un entraînement propre (18) et est réalisé selon l'une des revendications 1 à 5.

7. Dispositif selon la revendication 1, **caractérisé en ce que** l'organe de convoyage (9) réalisé sans fin présente au côté extérieur éloigné des éléments de renvoi (11a, 21) des éléments d'engagement (43) qui présentent de préférence une face de contact profilée (34).

8. Dispositif selon la revendication 1, **caractérisé en ce que** les éléments d'engagement (43) sont réalisés en un matériau synthétique réversible résiliant, par exemple en matière thermoplastique et, en position d'enlèvement, sous l'effet de la force d'application (33) à la paroi latérale (31) sont réalisés d'une manière déformable élastiquement.

9. Dispositif selon la revendication 1, **caractérisé en ce que** l'organe de convoyage (9) présente des espaces libres (66) délimités latéralement entre les éléments d'engagement (43) par des flancs (64, 66), qui sont réalisés de telle sorte que lors d'un mouvement de convoyage d'une marchandise (2) entre une position de stockage horizontale et une position d'enlèvement basculée, une arête avant (44) pénètre dans un des espaces libres (66) et s'appuie à un flanc (65).

10. Dispositif de transport (1) pour des marchandises (2) avec un bâti de support (3) déplaçable dans la direction verticale et/ou horizontale, **caractérisé en ce que** celui-ci comprend un dispositif (4) logé au bâti de support (3) et réalisé selon l'une des revendications 1 à 9 pour l'enlèvement de marchandises (2) d'un parc de stockage (19).

11. Procédé d'enlèvement de marchandises (2) d'un parc de stockage (19), par exemple d'un moyen auxiliaire de chargement (5) au moyen d'un organe de convoyage (9) d'un dispositif de convoyage (7) et d'une face de contact (34), dans lequel, dans une position de reprise, la face de contact (34) est appliquée par friction à la paroi latérale (31) orientée vers l'organe de convoyage (9) d'au moins une marchandise (2) et est déplaçable de telle sorte qu'au moins une marchandise (2) est déplacée par le contact de friction vers le haut et est convoyé sur l'organe de convoyage (9), **caractérisé en ce que** le dispositif de convoyage (7) est déplacé en direction d'au moins une marchandise (2) dans la position de reprise, dans laquelle une section d'application (32) réalisée par l'organe de convoyage (9) au moins dans une des zones de renvoi (10a, 10b), et sensiblement parallèle à la paroi latérale (31) de la marchandise (2), approximativement verticale, est appliquée par friction à la paroi latérale (31) de la marchandise (2).

12. Procédé selon la revendication 11, **caractérisé en ce que** l'organe de convoyage (9), lors de l'enlèvement d'au moins une marchandise (2) est déplacé par un troisième élément de renvoi (21) déplaçable relativement au premier élément de renvoi (11a) solidaire du châssis d'une position d'enlèvement dans la position de transport, où est réalisé par l'organe de convoyage (9) en position d'enlèvement la section d'application approximativement verticale (32) et dans la position de transport une section de convoyage (22a) inclinée par rapport à un plan horizontal.
